# EUROPEAN PATENT SPECIFICATION

(11) **EP 2 217 481 B1**
(45) Date of publication and mention of the grant of the patent: **25.04.2018**
(21) Application number: 08847788.0
(22) Date of filing: 07.11.2008
(51) Int. Cl.: B60W 40/12, B60W 40/10, B60W 40/06, B60W 40/04, B60W 30/18, B60W 50/08

(54) **VEHICLE SYSTEM**
FAHRZEUGSYSTEM
SYSTÈME DE VÉHICULE

(30) Priority: 08.11.2007 GB 0721934
(43) Date of publication of application: 18.08.2010
(73) Proprietor: Bunn, Jason Robert, Tivetshall St. Margaret, Norfolk NR15 2DL (GB)
(72) Inventor: Bunn, Jason Robert, Tivetshall St. Margaret, Norfolk NR15 2DL (GB)
(74) Representative: ip21 Ltd
(86) International application number: PCT/GB2008/051041
(87) International publication number: WO 2009/060241

(56) References cited:
- EP-A- 1 777 135
- EP-A- 1 923 291
- DE-A1- 19 941 966
- DE-A1-102004 017 115
- DE-U1-202006 003 700
- US-A1- 2005 055 157

## Description

### Field of the Invention

The invention relates to vehicle systems.

### Background to the Invention

Self-propelled internal combustion vehicles such as the motorcar waste energy during its operation. Any improvement in efficiency of the use of the energy it consumes during its operation is of considerable significance given the increasing shortage of energy resource and the impact of consumption on the environment. One prior art energy saving system converts at least a portion of the braking energy into electricity employed for the powering of the forward motion in certain vehicles.

The following documents form, to the best of the Applicant's knowledge, the prior art: DE102004017115 A1 (ZAHNRADFABRIK FRIEDRICHSHAFEN) which discloses automatic gear system which is fully automatic so that in the case of a downhill gradient being in proximity to a travelling vehicle, the engine automatically remains switched off. However, in an uphill gradient condition, the automatic freewheeling system doesn't switch on.

DE19941966A1 (VOLKSWAGEN AG) teaches a system which displays warning messages about traffic hold-ups and road conditions by using a navigation system. The system is configured to pick up traffic information, for which geographical positions are recorded. These positions can be displayed in the digital road map to correspond with their recorded geographical positions.

EP1777135A (MAN NUTZFAHRZEUGE AG) teaches a method involving the determination of positional data of a vehicle at a first preset time period and the determination of positional data of the vehicle for a future period. Adjustments of driving parameters are considered dependent of the positional data determined for the future period.

DE202006003700U1 (KRAEMER VOLKER) teaches that a vehicle can be used in an idling mode in order to save energy without a loss of control occurring when the clutch is released. The accelerator pedal of the prior art is positioned above a coil spring in order to achieve a particular operating pattern.

US 2005/055157A1 (SCHOLL GREGOR) discloses a navigation system of a motor vehicle which has an input unit, a position-determining unit, a central processor unit (CPU) for calculating a route between a first and a second location by reference to map data which contains information for determining a predicted fuel consumption for the route, and an output unit for outputting travel instructions which are matched with the current position of the vehicle. A maximum travel time for a journey from the first location to the second location is predefined by a user using the input unit and the route is determined such that the predefined maximum travel time is not exceeded, and the anticipated fuel consumption is minimized.

EP1923291A (BOSCH GMBH) discloses a method involving detecting the position data and the speed data of a motor vehicle, which are processed along with data of a digitalized map of a road system.

### Summary of the Invention

In its broadest independent aspect, the invention provides a vehicle system comprising:
- a detector for detecting the position and direction of a vehicle during its displacement;
- a database of mapping information;
- a database of gradient information;
- a controller which, dependent upon the measured speed of said vehicle and predetermined gradient information for said anticipated displacement path, derives the extent of freewheeling if said freewheeling option is taken; and characterised in that
- the system further comprises a display for presenting mapping information relevant to said vehicle's position and its anticipated displacement path; said controller being configured to indicate the option of freewheeling via said display.

In a further subsidiary aspect, the system further comprises a detector for detecting the presence of a gradient in a displacement path.

In a further subsidiary aspect, the system further comprises a detector for detecting the weight of the vehicle.

In a further subsidiary aspect, the system further comprises a user interface for selecting an option or entering data representative of the weight of the vehicle.

In a further subsidiary aspect, the system further comprises means for comparing the extent of freewheeling for a plurality of displacement paths.

In a further subsidiary aspect, the system further comprises means for calculating the likely fuel consumption for a plurality of displacement paths and for rating said paths dependent upon the likely fuel consumption values.

In a further subsidiary aspect, said controller operates in conjunction with an externally visible indicator for indicating to other drivers that a vehicle is in a freewheeling mode of operation.

In a further subsidiary aspect, said controller indicates the option of freewheeling at a variable point along the displacement path dependent upon measured speed of vehicle, weight of vehicle and one or more events in the displacement path.

This configuration is particularly advantageous it reduces fuel consumption as it allows the vehicle to effectively coast towards a point on the displacement path such as traffic lights, roundabouts, bends, traffic jams, obstacles in a road without a driver having to solely rely on his/her vision. This system also reduces the mechanical wear and tear of the vehicle since less braking is required. Furthermore, it also improves the environmental impact of the vehicles during freewheeling since it minimises or does away altogether with engine noise. This system also has the added benefit of causing a reduction of speed when arriving towards a traffic slow point, which will improve road safety.

In a subsidiary aspect in accordance with one of the invention's broadest independent aspects, said controller allows the switching of the vehicle between modes of operation dependent upon the predetermined proximity and/or the presence of a gradient in a displacement path. The configuration allows a driver to select freewheeling without the driver experiencing a reduction in performance. It also allows the driver to select his/her path dependent upon gradient and not only average achievable speed and distance for a particular path.

In a further subsidiary aspect, the system further comprises a detector for detecting the presence of a gradient in a displacement path. This would allow the system to operate with existing two dimensional global positioning mapping services whilst achieving the benefit of providing a driver and/or the controller with the information required to benefit from an energy saving mode of operation.

In a further subsidiary aspect, the system further comprises a detector for detecting the weight of the vehicle. This configuration is particularly advantageous because it allows the controller to adjust the point of freewheeling.

In a further subsidiary aspect, the system further comprises means for inputting the weight of the vehicle and for selecting a displacement path. This configuration would allow the inputting of the controller to be more precise and for a driver to select a displacement path dependent upon potential saving which are obtainable from a given path selection.

In a further subsidiary aspect, the system further comprises means for calculating the likely fuel consumption for paths and for rating said paths dependent upon the likely fuel consumption they will use. This system marks a departure from the conventional systems, which provide the selection of paths on the basis of the likely time of transit rather than the environmental impact of the route selected.

In a further subsidiary aspect, said controller allows the switching of the vehicle between modes of operation dependent upon the predetermined proximity and/or the occurrence of a junction in a displacement path. This configuration is particularly advantageous because it allows the frequent activation of the energy reducing system and therefore allows the maximisation of the energy saving over an extended period of time.

In a further subsidiary aspect, said controller indicates the option of freewheeling at a variable point along the displacement path dependent upon measured speed of vehicle, weight of vehicle and one or more events in the displacement path. This configuration is particularly advantageous because it allows the energy consumption to be tailored to a particular driver's profile and his or her vehicle.

### Brief Description of the Figures

Figure 1 shows a flow diagram of a first embodiment of the invention.
Figure 2 shows a flow diagram which is included for descriptive purposes only.
Figure 3 shows a flow diagram for a third embodiment of the invention.

### Detailed Description of the Figures

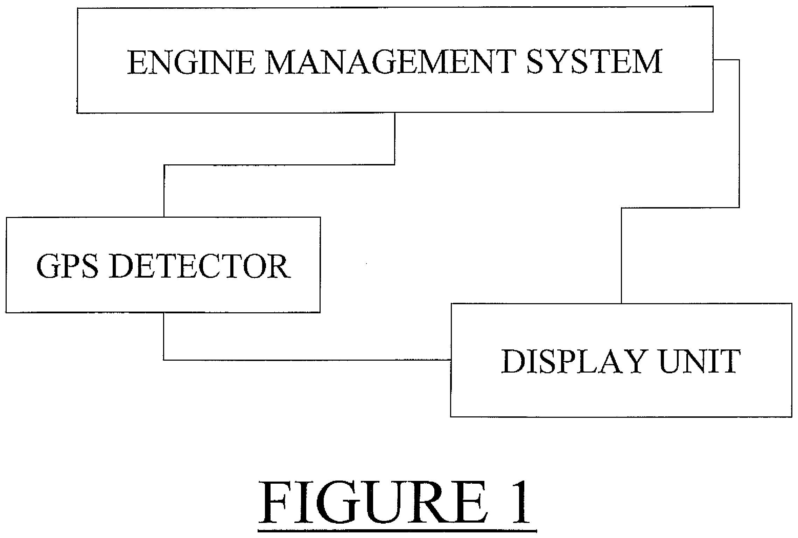

Figure 1 shows the engine management system of a vehicle such as a motorcar. The invention may be applied to other types of vehicles such as air and sea going vehicles. Particularly advantageous applications of the invention concern its application to domestic and industrial land going vehicles such as motorcars and trains. The engine management system controls the switching on and off of the engine and its operation throughout. It is envisaged that the energy management system may also control the extent, which the gears are engaged. The vehicle of the embodiment of figure 1 incorporates a global positioning system, which detects the position of the vehicle and its direction of travel. The GPS detector may be a separate portable device without any connection to an engine management system in any of the embodiments of the invention. The GPS detector is able to receive information remotely to cause information to be displayed relating to an opportunity for the driver to switch the operation of the vehicle from a propelled or internal propulsion mode of operation to a freewheeling mode operation. The conventional propelled mode of operation is when the motion generated by an internal combustion engine is transmitted to the wheels of a vehicle in order to drive its displacement.

The freewheeling mode of operation covers a mode of operation where the engine's power is preserved or simply switched off in order to reduce its consumption. In one freewheeling mode, the engine may be switched off for all purposes apart from supplying the necessary power for steering and for braking. In another freewheeling mode of operation, the gears are disengaged in the ordinary "neutral" position. In a particular freewheeling mode of operation, the control system may initially disengage the gears and then after a period of time or in certain conditions switch the engine off entirely.

In the embodiment of figure 1, the display unit may indicate to a driver that an opportunity exists to benefit from freewheeling. A button may be provided as part of the vehicle's controls, which may be actuated by a driver to switch from ordinary propelled mode of operation to a freewheeling mode of operation. Instead of a button, the vehicle's clutch and gear lever may be employed to that effect. The display unit may receive information to provide advanced warning to a driver when approaching traffic lights, roundabouts, bends, traffic jams or a particular downhill location in order to facilitate the optional switching of the driver from one mode of operation to the other.

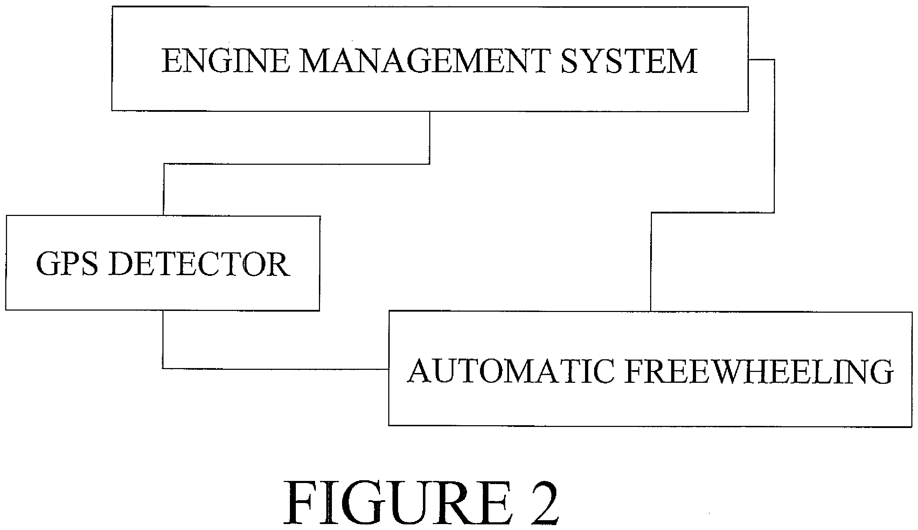

Figure 2 shows an embodiment which is not part of the claimed invention where the positional information of a vehicle is employed to automatically switch a vehicle into a freewheeling mode of operation. For example, as the vehicle is determined to be approaching the top of the hill, the engine management system would receive instructions from the GPS detector causing the automatic disengagement of the gears and/or the switching of the engine in order to allow the vehicle to rely on its initial momentum and gravity to continue on its path of displacement. The vehicle may also be equipped with indicators for sounding an alarm or displaying a visual alarm such as flashing lights to indicate for the benefit of other drivers that a particular vehicle is in a freewheeling mode. The light may for example be a green light, which would be one of a cluster of lights in for example the tailgate of a motorcar.

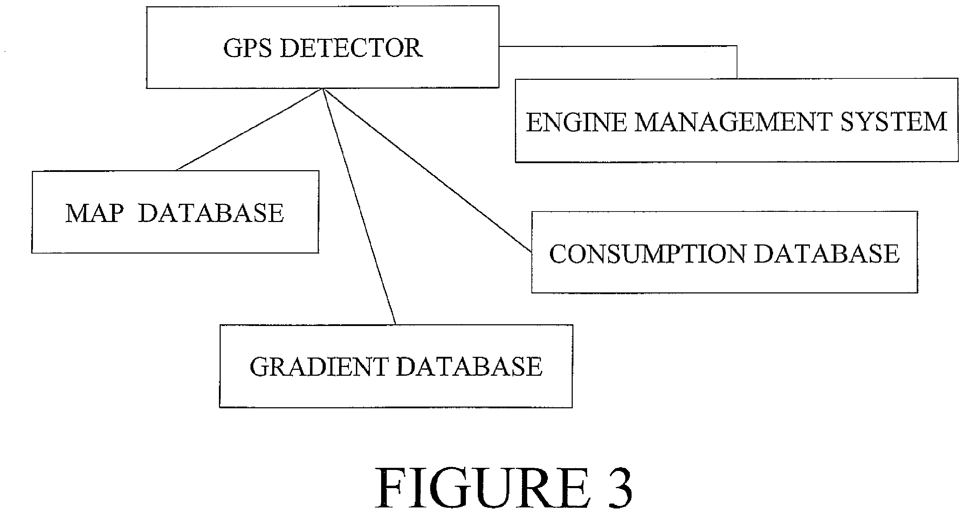

As show in figure 3, the GPS detector may receive positional data in the form of maps showing a vehicle. The maps may be continuously updated to display a vehicle's current position. The maps and gradient information may be stored locally on the GPS device or remotely. In addition, the GPS detector receives information from a gradient database, which has been built up from surveys in order to allow the control of the vehicle dependent upon the presence of a slope sufficient for practicing freewheeling. In addition, the GPS detector may also receive feeds relating to likely consumption values for a particular selected route. The GPS detector may also present alternative routes dependent upon likely fuel consumption in order to allow a driver to select his/her route dependent upon consumption rather than simply dependent upon distance and likely time of transit.

In addition, a vehicle is configured to incorporate optionally sensors in the suspension of the vehicle, for example, which are able to determine the load a particular vehicle is carrying. This will allow the calculation of when the switch from ordinary mode of operation to freewheeling ought to take place. This will allow the display inviting a driver to switch modes of operation to arrive at an optimum time point. In a similar fashion to switching from cruise control to ordinary driving mode, a vehicle may switch back from the freewheeling mode of operation to the powered mode of operation by simply pressing the accelerator. In addition, it is envisaged that the display may also indicate when a driver ought to engage a gear and which gear to engage.

The system may also calculate precisely when to cut out power so as to arrive at a point the driver would wish to stop with little or no breaking required at all.

Information with regards to the vehicle speed would be measured in order to further accurately predict when switching between modes of operation would be appropriate. The speed measurements may be obtained from the GPS device itself or be obtained from the engine management system. The distance of potential freewheeling may be obtained by looking up the gradient for a particular route, the measured speed and weight of vehicle in a look up table. Alternatively, approximate data may be obtained by simple physics equations which are known at the time of drafting this application.

The information gathered in terms of vehicle speed and weight and any other information may be stored either on board the vehicle or remotely. A GPS device may incorporate a touch screen to act as a user interface. Alternatively, it may respond to voice activation.

A database of typical vehicle weights may be accessed by the GPS unit. The user may select the appropriate vehicle from a list of vehicles. Additional weight information may be inputted into the system via an appropriate user interface which would allow the user to choose the level of load. The user may be able to choose from a variety of options such as luggage pieces, number of passengers, goods etc.

## Claims

1. A vehicle system comprising:
• a detector for detecting the position and direction of a vehicle during its displacement;
• a database of mapping information;
• a database of gradient information;
• a controller which, dependent upon the measured speed of said vehicle and predetermined gradient information for said anticipated displacement path, derives the extent of freewheeling if said freewheeling option is taken; and **characterised in that**
• the system further comprises a display for presenting mapping information relevant to said vehicle's position and its anticipated displacement path; said controller being configured to indicate the option of freewheeling via said display.

2. A system according to according to claim 1, wherein the controller determines the distance of potential freewheeling by looking up the gradient for a particular route, the measured speed and the weight of a vehicle from a look up table.

3. A system according to either of the preceding claims, further comprising a detector for detecting the presence of a gradient in a displacement path.

4. A system according to any of the preceding claims, further comprising a detector for detecting the weight of the vehicle.

5. A system according to any of the preceding claims, further comprising means for inputting the weight of the vehicle.

6. A system according to any of the preceding claims, further comprising means for calculating the likely fuel consumption for a plurality of displacement paths and for rating said paths dependent upon the likely fuel consumption values.

7. A system according to any of the preceding claims, wherein said controller operates in conjunction with an externally visible indicator for indicating to other drivers that a vehicle is in a freewheeling mode of operation.

8. A system according to any of the preceding claims, wherein said controller indicates the option of freewheeling at a variable point along the displacement path dependent upon measured speed of vehicle, weight of vehicle and one or more events in the displacement path.

## Patentansprüche

1. Fahrzeugsystem, das umfasst:
• einen Detektor zur Erkennung der Position und Richtung eines Fahrzeugs während dessen Bewegung;
• eine Datenbank mit Karteninformationen;
• eine Datenbank mit Gefälleinformationen;
• eine Steuerungseinrichtung, die in Abhängigkeit von der gemessenen Geschwindigkeit des Fahrzeugs und von vorgegebenen Gefälleinformationen für die erwartete Bewegungsstrecke das Ausmaß des Freilaufs ableitet, wenn die Freilaufoption gewählt wird; und **dadurch gekennzeichnet, dass**
• das System des Weiteren ein Display zur Darstellung von Karteninformationen umfasst, die relevant für die Position des Fahrzeugs und dessen erwartete Bewegungsstrecke sind; wobei die Steuerungseinrichtung dazu konfiguriert ist, die Freilaufoption über das Display anzuzeigen.

2. System nach Anspruch 1, wobei die Steuerungseinrichtung die Distanz des potenziellen Freilaufs ermittelt, indem sie das Gefälle für eine bestimmte Streckenführung, die gemessene Geschwindigkeit und das Gewicht eines Fahrzeugs aus einer Nachschlagetabelle abruft.

3. System nach einem der vorstehenden Ansprüche, das des Weiteren einen Detektor zur Erkennung der Anwesenheit eines Gefälles in einer Bewegungsstrecke umfasst.

4. System nach einem der vorstehenden Ansprüche, das des Weiteren einen Detektor zur Erkennung des Gewichts des Fahrzeugs umfasst.

5. System nach einem der vorstehenden Ansprüche, das des Weiteren eine Einrichtung zum Eingeben des Gewichts des Fahrzeugs umfasst.

6. System nach einem der vorstehenden Ansprüche, das des Weiteren eine Einrichtung zum Berechnen des voraussichtlichen Kraftstoffverbrauchs für eine Vielzahl von Bewegungsstrecken und zur Bewertung dieser Strecken in Abhängigkeit von den wahrscheinlichen Kraftstoffverbrauchswerten umfasst.

7. System nach einem der vorstehenden Ansprüche, wobei die Steuerungseinrichtung in Verbindung mit einer extern sichtbaren Anzeige arbeitet, die anderen Fahrern anzeigt, dass sich das Fahrzeug in einem Freilaufbetriebsmodus befindet.

8. System nach einem der vorstehenden Ansprüche, wobei die Steuerungseinrichtung die Freilaufoption an einer variablen Stelle entlang der Bewegungsstrecke in Abhängigkeit von der gemessenen Geschwindigkeit des Fahrzeugs, dem Gewicht des Fahrzeugs und einem oder mehreren Ereignissen in der Bewegungsstrecke anzeigt.

## Revendications

1. Un système de véhicule comprenant :
un détecteur pour détecter la position et la direction d'un véhicule pendant son déplacement ;
une base de données d'informations cartographiques ;
une base de données d'informations de gradient ;
un dispositif de commande qui, en fonction de la vitesse mesurée dudit véhicule et des informations de gradient prédéterminées pour ledit trajet de déplacement anticipé,
déduit la longueur de roulage en roue libre si ladite option de roulage en roue libre est choisie ; et **caractérisé en ce que**
le système comprend en outre un affichage pour présenter des informations cartographiques pertinentes à la position dudit véhicule et à son trajet de déplacement anticipé ; ledit dispositif de commande étant configuré pour indiquer l'option de roulage en roue libre via ledit affichage.

2. Un système selon la revendication 1, dans lequel le dispositif de commande détermine la distance de roulage en roue libre potentiel en recherchant le gradient pour un itinéraire donné, la vitesse mesurée et le poids d'un véhicule à partir d'une table de référence.

3. Un système selon l'une ou l'autre des revendications précédentes, comprenant en outre un détecteur pour détecter la présence d'un gradient dans un trajet de déplacement.

4. Un système selon n'importe lesquelles des revendications précédentes, comprenant en outre un détecteur pour détecter le poids du véhicule.

5. Un système selon n'importe lesquelles des revendications précédentes, comprenant en outre un moyen pour entrer le poids du véhicule.

6. Un système selon n'importe lesquelles des revendications précédentes, comprenant en outre un moyen pour calculer la consommation de carburant probable pour une pluralité de trajets de déplacement et pour évaluer lesdits trajets en fonction des valeurs de consommation de carburant probable.

7. Un système selon n'importe lesquelles des revendications précédentes, dans lequel ledit dispositif de commande fonctionne conjointement avec un indicateur visible de l'extérieur pour indiquer aux autres conducteurs qu'un véhicule se trouve dans un mode de fonctionnement de roulage en roue libre.

8. Un système selon n'importe lesquelles des revendications précédentes, dans lequel ledit dispositif de commande indique l'option de roulage en roue libre à un point variable sur le trajet de déplacement en fonction de la vitesse mesurée du véhicule, du poids du véhicule et d'un ou de plusieurs événements dans le trajet de déplacement.
